# EUROPEAN PATENT SPECIFICATION

(11) **EP 3 222 460 B1**
(45) Date of publication and mention of the grant of the patent: **19.12.2018**
(21) Application number: 16161991.1
(22) Date of filing: 23.03.2016
(51) Int. Cl.: B60N 2/28

(54) **VEHICLE CHILD SEAT**
FAHRZEUGKINDERSITZ
SIÈGE D'ENFANT POUR VÉHICULE

(43) Date of publication of application: 27.09.2017
(73) Proprietor: Volvo Car Corporation, 40 531 Göteborg (SE)
(72) Inventor: Heurlin, Fredrik, 42353 Torslanda (SE); Wallin, Helena, 42354 Torslanda (SE)
(74) Representative: Valea AB

(56) References cited:
- US-B1- 6 463 372

## Description

### TECHNICAL FIELD

The present invention relates to a rearward facing vehicle child seat and a method for operating a rearward facing vehicle child seat. The vehicle child seat comprises a seat, a sensor arrangement and a processing unit for switching between different modes. The different modes either permits the seat to be displaced a first length, or restricts the distance which the seat is permitted to be displaced. The vehicle child seat provides an improved safety for both the child and the passenger sitting opposite to the vehicle child seat.

### BACKGROUND

Various vehicle child seats, also referred to as child restraint seats (CRS), have been proposed in order to provide increased safety for the children, specifically infants. There are two distinct types of vehicle child seats which have been developed to increase the safety for the child; forward facing vehicle child seats and rearward facing vehicle child seats. The forward facing vehicle child seats are generally positioned so that the child is looking and facing in a forward direction, i.e. towards the front of the vehicle, while rearward facing vehicle child seats generally are positioned so that the child faces towards the rear of the vehicle, each type having its own advantages.

To increase the safety or the child, a child seat can be manipulated so as to respond to different data input. The US patent application no. US 2002/0188393 A1 assigned to Takata Corporation, discloses a vehicle collision damage reduction system. The system appears to be applicable to both a forward facing vehicle child seat and a rearward facing vehicle child seat. The system detects if an increased danger level exists and provides corrective measure accordingly. For the vehicle child seat, the corrective measure is disclosed as being an adjustment of the inclination of the child seat to better safe guard the child.

Child seats are in a manner of speaking disconnected from the other passengers in terms of accessibility for a caretaker and field of view for the child. They promote little interaction between the child and the caretaker. There are scenarios when caretakers sometimes compromise their own safety in order to nurse their child. Children may require unplanned food and comfort. Sometimes, if the child is unbalanced, the temper of the child may provoke actions from the caretaker, e.g. a passenger or a driver of the vehicle. They may for instance remove their own safety belt in order to reach the child or just to check the status of the child during driving. Such provoked situations may be dangerous. It is clear that there is a need to provide means and resources for the passengers to enable easy communication between child and caretaker while not compromising with the safety for any one of the passengers.

### SUMMARY

It is an object of the present invention remove the drawbacks, or to at least reduce the drawbacks, or to at least provide a useful alternative of the prior art. The object is at least partly met by a rearward facing vehicle child seat and a method for operating a rearward facing vehicle child seat. More specifically, the object is at least partly met by a rearward facing vehicle child seat for a vehicle. The vehicle child seat comprises a displaceable seat, a sensor arrangement and a processing unit. The processing unit can operate the seat as a response to input from the sensor arrangement between at least a nursing mode, in which the seat can be displaced a first distance with respect to a selected reference point, and a restricted mode in which the seat is restricted from displacement along the full length of the first distance.

The object is further at least partly met by a method for operating a rearward facing vehicle child seat. The vehicle child seat comprises a displaceable seat, a sensor arrangement and a processing unit. The seat is displaceable a first distance when being in a nursing mode, the method comprises the steps of;
a) retrieving input data from the sensor arrangement indicating an increased probability for an accident;
b) based on at least the input data from the sensor arrangement, switching to a restricted mode in which the available displacement distance for the seat is restricted as compared to the first distance.

It should be noted that features described with reference to the vehicle child seat may be applied on the method and vice versa. The vehicle child seat and the method for operating the child seat provide a vehicle child seat which permits a caretaker to comfort and communicate with the child without compromising with the safety aspects. The vehicle child seat is preferably a vehicle child seat which is adapted to substitute a passenger seat. By replacing the vehicle seat with a vehicle child seat, a removable child seat does not need to be positioned on a passenger seat, and generally the seat cushion of the passenger seat. The restriction of the available displacement distance can be made mechanically, e.g. via a mechanical lock, or by restricting it electronically e.g. via controlling, such as blocking or unblocking, an electrical motor operating the displacement of the seat.

When providing a vehicle with a rearward facing vehicle child seat, there is a risk that the rear passenger facing the rearward facing vehicle child seat may lean forward towards the vehicle child seat, or be propelled forward in case of an accident. Even small changes in distances between the passenger and the child may give large differences from a safety perspective. The present vehicle child seat and method address this by providing a displaceable rearward facing vehicle child seat which can be operated between two different modes. One mode being a nursing mode defined by an available first displacement distance, and the second mode being a restricted mode, defined by that the seat is restricted from displacement along the full available displacement distance. The seat may however still be displaced but within a restricted zone. By the restriction in the available displacement distance, the seat can be distanced from a rear passenger sitting opposite the child but still permit some adjustment along the available distance. If a child is positioned too close to a rear passenger during a high velocity crash there is a risk of contact between the rear passenger and the child. It is believed that the provided solution may reduce potential head injuries from occurring e.g. during heavy retardations, as a rear passenger facing towards the front of the vehicle tends to continue to move forward due to the inertia of the body when the vehicle brakes or comes to a sudden stop. During a low velocity crash this risk is much smaller and as such, it imposes unnecessary restrictions to the passenger and the child by having a maximum distance between them at all times.

US-A-6463372 discloses a vehicle collision damage reduction system adjusting the inclination of a child seat if detects an increasing danger level.

Accordingly, it has been found advantageous to reduce the risk before or during crashes by restricting the movement of the seat of the vehicle child seat, so there is a sufficient distance between the reference point, such as the rear passenger seat, center console, associated door, front dashboard or another reference point, and the seat of the vehicle child seat.

The seat may be configured to be displaced along one or more, or two or more axes, preferably three axes. The seat may thus be adjustable in a length direction, width direction and/or height direction of the vehicle. The restricted mode may restrict the available displacement along one or more of the axes, preferably two or more, or all three axes. According to an aspect, the available displacement may be zero, i.e. the seat may thus be fully prevented from displacement.

The sensor arrangement is adapted to retrieve data from sensors. The sensor arrangement may comprise one or more sensors. The one or more sensors may be sensors for passenger data, speedometer data, GPS data, road information, weather data, road condition data, traffic information data, vehicle to vehicle information; pre-crash information; chronometer data, ambient light data, face or gesture user interface data. The one or more sensors may be vehicle sensors and thus arranged on the vehicle. The vehicle child seat is thus simply connectable to the vehicle system and adapted to communicate with the appropriate sensors, or other units of the vehicle to retrieve the desired information from the relevant sensors. Optionally or additionally the vehicle child seat may comprise one or more own sensors such as one or more of the sensors listed above. The individual sensors are known per se and will not be described further herein.

The vehicle child seat may comprise at least one electrical motor facilitating the displacement of the seat. The at least one electrical motor may effectuate the displacement along one or more axes. The vehicle child seat may comprise an electrical motor for each axis for effectuate the displacement along respective axis.

In the restricted mode the available displacement may be restricted to 90 % of the first distance, preferably to 85 % of the first distance, more preferably to 80 % of the first distance, even more preferably to 75 % of the first distance. The available distance which the seat can be displaced along when being in the restricted mode may be 90 % of the first distance, i.e. of when the vehicle child seat is in the nursing mode, preferably 85 % of the first distance, more preferably 80 % of the first distance, even more preferably 75 % of the first distance.

The restricted mode may however permit displacement of the seat, even though the available displacement distance is restricted as compared with the nursing mode. For example, the restricted mode may permit displacement of the seat at least 10 % of the first distance, preferably 20 % of the first distance. Hence in an embodiment, the available displacement distance in the restricted mode is maximum 90 % of the first distance and a minimum 10 % of the first distance, optionally maximum 85 % and minimum 20 %, preferably maximum 80 % and minimum 20 % of the first distance. This permits the seat to be displaced far enough away from the rear seat passenger, effectively from the rear seat, while at the same time permit rear seat passenger to adjust the vehicle child seat so that the needs of the child are not neglected.

The restricted mode may comprise an accident mode. In the accident mode, the seat may be displaced to a predetermined position adapted for an imminent collision. Preferably the predetermined position is selected so that it maximizes the distance between the reference point and the seat, e.g. between the opposing rear passenger seat and the seat of the vehicle child seat. This feature will further improve the safety for the child.

As is understood, the vehicle child seat may be switchable between two or more modes. By having different modes, the needs of the child can be balanced with the safety perspective of all the passengers, and tailor made for different scenarios which is believed to increase the safety for the child and the passengers of the vehicle. The vehicle child seat may comprise an exit mode or accident mode for example. In the exit mode, the seat is rotated to face an associated vehicle door. This will enable a simple insertion and removal of the child.

A vehicle comprising at least one vehicle child seat is also provided. The vehicle child seat is preferably arranged as a module to be replaceable with a front passenger seat, or at least with portions of a front passenger seat. The displacement mechanism and/or electronic control system of a front passenger seat of a vehicle may thus be used to displace the vehicle child seat. This enables a rear seat passenger to sit opposite of the child sitting in the vehicle child seat.

The vehicle child seat is preferably arranged so that the first distance is substantially horizontal after being mounted to the vehicle, or parallel with a main direction of the vehicle chassis of the vehicle, and extending along the length of the vehicle. The first distance is thus preferably parallel with the longitudinal extension of the vehicle.

The restriction of the available displacement distance defines a restricted zone. The processing unit may initiate a displacement of the seat if the seat is positioned outside of the restricted zone. If the processing unit, or a passenger, prompts the vehicle child seat to the restricted mode, the seat will automatically be displaced to the restricted zone which permits only restricted displacement of the seat.

The method may comprise the step of; determining one or more parameters indicating an increased probability for an accident, and based on the one or more parameters, restrict the available displacement distance for the seat.

When the processing unit detects a decreased probability for an accident, or that the increased probability for an accident is returned to normal, a pre-set value or state, i.e. is nullified. The restricted mode is cancelled and the vehicle child seat is returned to its nursing mode, permitting a passenger to again displace the seat along the full length of the first distance. The just mentioned normal can be set by a passenger or provided via third parties via a communication network.

### BRIEF DESCRIPTION OF THE DRAWINGS

Non-limiting embodiments of the present invention will be described in greater detail with reference to the accompanying drawings in which;
figure 1 shows portions of a vehicle with a vehicle child seat positioned at the front passengers side of the vehicle facing a rear passenger sitting in an opposing rear passenger seat and;
figure 2 shows a schematic process scheme for the method for operating between different modes.

### DETAILED DESCRIPTION OF PREFERRED EMBODIMENTS

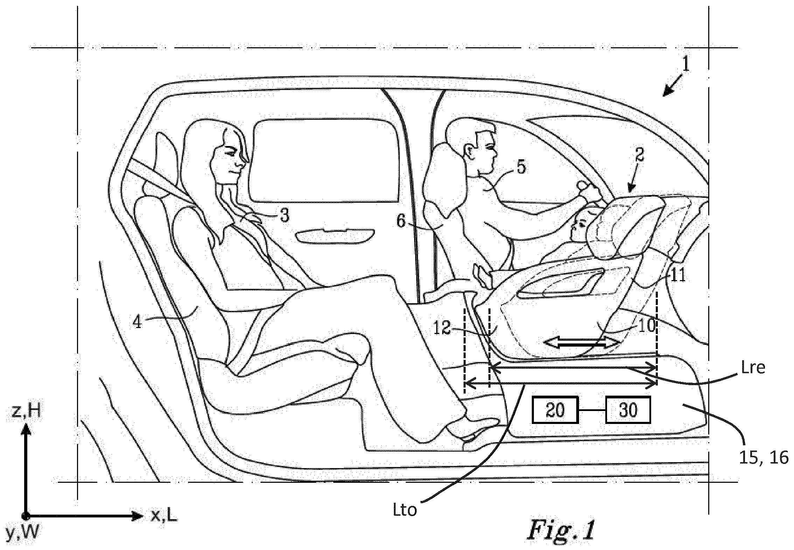

Figure 1 shows a vehicle 1 with a rearward facing vehicle child seat 2, herein sometimes only referred to as the vehicle child seat 2 or optionally a child restraint seat (CRS). For the purpose of orientation; three axes X, Y, Z are used, each axis being perpendicular to the other. The X axis corresponds to the length L of the vehicle, i.e. the longitudinal direction of the vehicle, the Y axis corresponds to the width W of the vehicle and the Z axis corresponds to the height H of the vehicle. Two passengers are further shown; a rear passenger 3 sitting in a rear seat 4 and a front passenger 5 sitting in a driver seat 6. The rearward facing vehicle child seat 2 is adapted to infants or toddlers in this case.

By the term "rearward facing" is herein meant that a child positioned in the rearward facing vehicle child seat will substantially be facing towards the rear of the vehicle with the back facing towards the front of the vehicle when positioned in an upright position. The child will thus be sitting face to face with the passenger 3 sitting in the rear seat 4 which is aligned with the vehicle child seat 2 along the x axis.

The vehicle child seat 2 comprises a seat 10 comprising a back rest portion 11 and a sit portion 12. The seat 10 is displaceably arranged to the vehicle 1 via a displacement mechanism 15 on a platform 16. The displacement mechanism 15 can be of a mechanism of manual type or of automatic type. A manual type of displacement mechanism is operated via a passenger to generally release a lock mechanism and move the seat using force, while an automatic type generally uses an electrical motor to operate the displacement mechanism. In the shown embodiment, the displacement mechanism comprises an electrical motor which is operated via a processing unit 20. The processing unit 20 may be the vehicles own on board computer or a separate processing unit arranged in the vehicle child seat 2. Just as a matter of example, the processing unit 20 may be a computer. The displacement mechanism 15 is the passenger seat displacement mechanism in this case, i.e. the displacement mechanism which the substituted passenger seat had, but the displacement mechanism may be a separate displacement mechanism of course.

A sensor arrangement 30 is connected to the processing unit 20. The sensor arrangement 30 in this case includes the vehicle sensors, including a communication device for receiving data from other vehicles, remote servers, or cloud data. The sensor arrangement 30 is adapted to collect, detect or determine, passenger data such as passenger position, weight or length, safety belts being buckled or not; speedometer data such as the vehicles 1 speed, absolute or relative; GPS data such as vehicle position, road information, highway, freeway, city environment or country environment, parking or the like; weather data, road condition data such as wet, icy, asphalt road, dirt road or the like; traffic information data such as queues, traffic density, congestion, accidents or the like; vehicle to vehicle information; pre-crash information; chronometer data such as the time, ambient light data such as intensity of the light, dusk, dawn, or night light, face or gesture user interface data such as to determine if the driver is tired or inattentive (Volvo Driver State Estimation).

The seat 10 is displaceable. The seat 10 can be displaced at least along one axis, preferably the X axis, i.e. along the length L of the vehicle 1. The seat 10 may however be displaceable along two or three axes. The seat 10 may further be pivotable about at least one axis, preferably about the Y axis and about the Z axis. The seat 10 is displaceable along the length L of the vehicle, i.e. along the X axis as indicated in figure 1 with the arrow. By having a displaceable seat 10, the position of the seat 10 may be adapted to different scenarios which may occur in order to improve the safety for the passengers and the child sitting in the seat 10. In the shown embodiment, the seat 10 has a total available displacement length of 35 cm along the X axis, i.e. along the length L of the vehicle 1.

The vehicle child seat 2 can be operated between a restricted mode and a nursing mode. In the restricted mode, the seat 10 is restricted from movement in terms of that it cannot be displaced or that it is only permitted to be displaced within a predefined zone or a predetermined distance. The restricted mode is generally used when data from the sensor arrangement indicates that the vehicle is subjected for an increased probability that an accident will occur, in other words a detected increased potential threat level. As a matter of example, when the seat 10 is positioned close to the rear passenger seat 4, in which the passenger 3 is sitting facing the child, there is an increased risk for accidental contact between the passenger and the child in case of a severe vehicle collision. Additionally, there is an increased risk for objects such as books for example, to accidentally slip from the passengers 4 hands during a severe vehicle collision, which run the risk of hitting the child in the seat 10. The distance between the rear passenger 4 and the child, i.e. the seat 10, may thus be adapted to provide an increased safety margin between the rear passenger 4 and the child.

When the vehicle child seat 2 is in the nursing mode, the full displacement length, in this case 35 cm, is available for positioning the seat 10. When the vehicle child seat 2 is in the restricted mode, only 90 % is the total available length is available for positioning the seat 10. It is further preferably only the 90 % furthest away from the rear passenger seat 3 to enable the longest distance there between.

The vehicle child seat 2 may be operable via a user interface (not shown), e.g. on the vehicle child seat 1, a vehicle interface, touch pad or mobile phone. The restricted mode may be prompted by one or more of the passengers via the user interface. For example, if the driver recognizes a potentially dangerous traffic situation, the driver may prompt the vehicle child seat 2 into the restricted mode by pressing a button or using a voice command for example. In the nursing mode, the seat 10 can be displaced within a zone or a distance which is larger than the predetermined zone of the restricted mode or the predetermined distance of the restricted mode. In the nursing mode the seat 10 is preferably displaceable the full available distance about each available axis.

As is clearly understood, the restricted mode and the nursing mode are representative of two different considerations taken. In the restricted mode, the seat 2 is positioned to increase the safety for the child in case of an accident, and in the nursing mode, the risk for an accident is assessed to be low enough for the seat 2 to be closer to a passenger, permitting the passenger to nurse the child sitting in the seat 2. The vehicle child seat 2 may be operable between other modes as well.

The vehicle child seat can also be operable to an exit mode. In the exit mode, the seat 10 is pivoted so that it faces the front door on the front passenger's side or the opposing front door on the driver's side to enable an easy exit for the child out of the vehicle 1. The seat 10 preferably pivots about the Z axis about 60-120 degrees, preferably about 90 degrees. One or more parameters may be used to prevent the vehicle child seat from entering the exit mode. As a matter of example such parameter may be that the vehicle is in motion, that the parking brake is not initiated, that the engine is in gear such as a forward gear or a reverse gear, no vehicle door is opened or the like. In more general terms, the vehicle child seat may be provided with at least one blocking parameter for preventing the switch between the modes.

The processing unit 20 is adapted to identify and preferably operate the vehicle child seat 2 between the different available modes, such as between a restricted mode, a nursing mode, an accident mode and/or an exit mode.

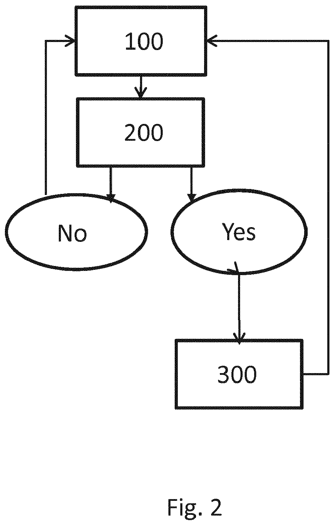

With reference to figure 2, non-limiting embodiments of the method will be described in greater detail. Reference is also made to figure 1 for the sake of clarity.

100; the sensor arrangement 30 continuously provides input data from the different available vehicle sensors and third party input data providers. In this example, the input data is the vehicle 1 GPS position, the vehicle speed, the traffic situation ahead and the weather conditions. The GPS position indicates that the vehicle is driving in a freeway, and that the speed of the vehicle is 110 km/h. Traffic congestion has been identified approximately 1500 m ahead of the vehicle. Available third party information indicates that the weather forecast is rain, which is confirmed by the sensor arrangement which detects that the windscreen vipers are on.

200; the processing unit 20 process the input data from the sensor arrangement 30 and based on the available data imposes the vehicle child seat 2 with a restricted mode. In the restricted mode, the seat 10 will be prevented from being displaced along the full available displacement length which would have been the case if the vehicle child seat 2 had been in the nursing mode. The processing unit 20 determines if the present mode needs to be changed based on the recent findings. If the vehicle child seat 2 was in the nursing mode before, the outcome of the step is "yes", and the vehicle child seat 2 is prompted into the restricted mode.

300; the processing unit 20 now immediately reviews if the vehicle child seat 2 needs to be adjusted in any manner in order to commit to the restricted mode prompted by the processing unit 20 earlier. In this case, the processing unit 20 identifies that the seat 10 is positioned outside of the restricted zone, defined by the permitted available displacement length indicated with reference Lre in figure 1 available for the seat 10 in the restricted mode. In this case, of the seat has a total available displacement length of 35 cm along the X axis, i.e. along the length of the vehicle 1 indicated with reference Lto in figure 1. As is noticed, the seat 10 is outside of the restricted zone. The processing unit 20 initiates a displacement of the seat 10 to the restricted zone in which the passenger 3 still may displace the seat 10 but within a more restricted zone, i.e. the seat 10 has a shorter available displacement distance.

The caretaker of the child in this case the passenger 4 sitting in the rear passenger seat 3 in front of the child, may press the seat displacement actuator on the vehicle child seat interface (not shown) as the caretaker has identified a need of the child. The vehicle child seat 2, which is in the restricted mode, prevents the seat 10 from being displaced to close to the passenger 4 than permitted by the restricted zone, in figure 1 defined by the length Lre represented by the arrow. The vehicle child seat 2 indicates via a user interface (not shown) that the vehicle child seat 2 is in a restricted mode, which indicates to the passenger that the processing unit 20 has identified a scenario with an increased probability for an accident.

In the above described scenario, the vehicle child seat 2 is prompted to the restricted mode from the nursing mode, and the seat 10 is subsequently only permitted to be displaced within a more restricted zone.

The vehicle child seat 2 may be prompted to other modes. Just as a matter of example and with reference to the example described above, if the sensor arrangement 30 detects that the vehicle 1 brake, and that the retardation is above a predetermined threshold value, the vehicle child seat 2 may be prompted to an accident mode. In the accident mode, the vehicle child seat 2 is positioned to prepare for a vehicle collision. Generally such position would be as far away from the passenger seat 4 as possible to prevent the passenger 3 from accidentally inflicting injuries to the child. When the vehicle child seat 2 is in the accident mode, it may further be supported e.g. by additional seat retention mechanisms, air bags, or other safety and emergency functions.

Parameters triggering an exit mode could be one or more of; that the parking brake is initiated, the safety belts of the passengers have been unbuckled, the engine has been turned off and/or the front door associated with the vehicle child seat 2 is opened.

The processing unit 20 may optionally, and during any stage of the process, initiate or communicate with other functions the vehicle. For example, if the vehicle child seat 2 is prompted to the restricted mode or the accident mode, the safety belt of the passenger 3 may be tightened to safe guard the passenger 3 from an imminent accident.

After a few minutes, the vehicle 1 has passed the detected traffic congestion and the road ahead is clear. The processing unit 20 could in this case remove the imposed restriction of the seat 10 and switch the vehicle child seat 2 back to the nursing mode as the increased probability for an accident is deemed to be removed, reduced or otherwise nullified.

The passenger(s) may via the user interface (not shown) of the vehicle child seat 2, or via a vehicle interface, adjust or manipulate the parameters which are used to define when the vehicle child seat 2 is to be switched to a different mode. The vehicle child seat 2 may also be provided with a memory unit and/or a communication unit to record events or data which at later stage may be used to identify a suitable mode for the vehicle child seat 2 based on the input data from the sensor arrangement.

The vehicle child seat 2 may further be provided with preset scenarios for identifying suitable modes. The vehicle child seat 2, optionally the sensor arrangement 30, may thus be provided with a memory unit and/or a communication unit which permits the processing unit 20 to compare the input data with preset scenarios either stored or retrieved from a remote location via a wireless network such as Wi-fi, 3G, 4G, 5G or similar networks for communication. Just as matter of example, a preset scenario could be that the vehicle is retarding heavily, such scenario is easy to detect and it can easily be understood that the vehicle 1 is subjected to an increased probability for an accident to occur.

Examples of parameters representing an increased risk for an accident which may trigger a restricted mode are; high speed motion, deteriorated weather conditions, heavy rain, traffic congestion ahead, slippery roads ahead, exiting a protected road, or closing up to an exit on a protected road just to mention a few. Examples of parameters representing no, or a very low risk, for an accident and which may trigger a nursing mode are; zero or low speed motion, clear weather and sight, good road grip, good road conditions just to mention a few. The table below gives non-limiting examples of how the vehicle child seat 2 may be configured to operate. Just as a matter of example, high speed may be considered to be speeds from 70 km/h and upwards. One or more of the columns may be used, and one or more of the additional data may be used.

| Vehicle speed | GPS data | Additional data | Mode | Seat response |
|---|---|---|---|---|
| Heavily decreasing | Freeway | Vehicle-to- vehicle systems alerting | Accident | Maximize distance to rear seat passenger |
| High | Freeway | Rain or traffic congestion or fog | Restricted | Restrict available positions |
| High | Freeway | Clear sight, good road conditions, low traffic, divided lanes | Nursing | Permit full displacement |
| Low | Urban | Clear sight, good road conditions, low traffic, divided lanes | Nursing | Permit full displacement |
| zero | Parking | Associated door opened | Exit | Rotate to exit position |

As is understood, one or more parameters, i.e. input data, may be used as decision support, either for the processing unit or for a passenger. Just as a matter of example, it may sufficient for the vehicle to drive faster than a threshold value to switch to the restricted mode, and in a similar manner, it may suffice for the vehicle to drive below a threshold value to switch to the nursing mode. The above columns may thus be used optionally or additionally to each other.

The user interface may be operated by a passenger to manipulate the parameters which may be used to assess whether a restricted mode, nursing mode or exit mode should be implemented.

## Claims

1. A rearward facing vehicle child seat for a vehicle, **characterized in that said** vehicle child seat (2) comprises a displaceable seat (10), a sensor arrangement (30) and a processing unit (20), wherein said processing unit (20) can operate said seat (10) as a response to input from said sensor arrangement (30) between at least a nursing mode in which said seat (10) can be displaced a first distance (Lto) with respect to a selected reference point, and a restricted mode in which said seat (10) is restricted from displacement along the full length of said first distance (Lto).

2. The rearward facing vehicle child seat according to any one of the preceding claims, wherein said reference point is a rear passenger seat (4) of said vehicle (1), a center console, an associated door, or a front dash board.

3. The rearward facing vehicle child seat according to any one of the preceding claims, wherein said seat (10) can be displaced along two or more axes (X, Y, Z), preferably three axes (X, Y, Z), and said restricted mode restricts the available displacement along one or more of said axes (X, Y, Z).

4. The rearward facing vehicle child seat according to any one of the preceding claims, wherein said sensor arrangement (30) comprises one or more sensors, preferably sensor(s) for passenger data, speedometer data, GPS data, road information, weather data, road condition data, traffic information data, vehicle to vehicle information; pre-crash information; chronometer data, ambient light data, face or gesture user interface data.

5. The rearward facing vehicle child seat according to any one of the preceding claims, wherein said vehicle child seat (2) comprises at least one electrical motor facilitating the displacement of said seat (10).

6. The rearward facing vehicle child seat according to any one of the preceding claims, wherein in said restricted mode the available displacement (Lre) is restricted to 90 % of the first distance (Lto), preferably 85 % of said first distance (Lto), more preferably 80 % of said first distance (Lto), even more preferably 75 % of said first distance (Lto).

7. The rearward facing vehicle child seat according to any one of the preceding claims, wherein said restricted mode comprises an accident mode in which said seat (10) is displaced to a predetermined position adapted for an imminent accident.

8. The rearward facing vehicle child seat according to any one of the preceding claims, wherein said vehicle child seat (2) comprises an exit mode, in which said seat (10) is rotated to face an associated vehicle door.

9. The rearward facing vehicle child seat according to any one of the preceding claims, wherein said vehicle child seat (2) is adapted to substitute at least portions of a passenger seat in said vehicle.

10. The rearward facing vehicle child seat according to claim 9, wherein said vehicle child seat (2) is adapted to cooperate with the displacement mechanism of said passenger seat, said displacement mechanism of said passenger seat being adapted to effectuate said displacement of said vehicle child seat (2).

11. A vehicle comprising the rearward facing vehicle child seat according to any one of the preceding claims, wherein said rearward facing vehicle child seat preferably is positioned at the front passenger position of the vehicle.

12. A method for operating a rearward facing vehicle child seat (2), said vehicle child seat (2) comprising a displaceable seat (10), a sensor arrangement (30) and a processing unit (20), said seat (10) being displaceable a first distance (Lto) when being in a nursing mode, said method comprising the steps of;
a) retrieving input data from said sensor arrangement (30) indicating an increased probability for an accident;
b) based on at least the input data from said sensor arrangement (30), switching to a restricted mode in which the available displacement distance for said seat (2) is restricted as compared to said first distance (Lto).

13. The method according to claim 12, whereby in step b) said available displacement distance (Lre) is restricted to 90 % of the first distance (Lto), preferably 85 % of said first distance (Lto), more preferably 80 % of said first distance (Lto), even more preferably 75 % of said first distance (Lto).

14. The method according to claim 12 or 13, whereby in step b), the restriction of the available displacement distance defines a restricted zone, whereby said processing unit (20) initiates a displacement of said seat (10) if said seat (10) is positioned outside of said restricted zone.

15. The method according to any one of the claims 12-14, whereby the method further comprises the step of; cancelling the restricted mode and switching to said nursing mode when said increased probability for an accident is returned to normal, or a pre-set value or state.

## Patentansprüche

1. Nach hinten gerichteter Fahrzeugkindersitz für ein Fahrzeug, **dadurch gekennzeichnet, dass** der Fahrzeugkindersitz (2) einen verschiebbaren Sitz (10), eine Sensoranordnung (30) und eine Verarbeitungseinheit (20) umfasst, wobei die Verarbeitungseinheit (20) den Sitz (10) als Reaktion auf die Eingabe von der Sensoranordnung (30) zwischen mindestens einem Pflegemodus, in dem der Sitz (10) um einen ersten Abstand (Lto) in Bezug auf einen ausgewählten Referenzpunkt verschoben werden kann, und einem eingeschränkten Modus, in dem der Sitz (10) über die gesamte Länge des ersten Abstandes (Lto) von der Verschiebung eingeschränkt ist, betreiben kann.

2. Nach hinten gerichteter Fahrzeugkindersitz nach einem der vorhergehenden Ansprüche, wobei der Referenzpunkt ein hinterer Beifahrersitz (4) des Fahrzeugs (1), eine Mittelkonsole, eine zugehörige Tür oder ein vorderes Armaturenbrett ist.

3. Nach hinten gerichteter Fahrzeugkindersitz nach einem der vorhergehenden Ansprüche, wobei der Sitz (10) entlang zwei oder mehr Achsen (X, Y, Z), vorzugsweise drei Achsen (X, Y, Z), verschoben werden kann, und der eingeschränkte Modus die verfügbare Verschiebung entlang einer oder mehrerer der Achsen (X, Y, Z) einschränkt.

4. Nach hinten gerichteter Fahrzeugkindersitz nach einem der vorhergehenden Ansprüche, wobei die Sensoranordnung (30) einen oder mehrere Sensoren, vorzugsweise einen Sensor(en) für Fahrgastdaten, Geschwindigkeitsmesserdaten, GPS-Daten, Straßeninformationen, Wetterdaten, Straßenzustandsdaten, Verkehrsinformationsdaten, Fahrzeug-zu-Fahrzeug-Informationen, Vor-Unfall-Informationen, Chronometerdaten, Umgebungslichtdaten, Gesichts- oder Gesten-Benutzeroberflächendaten umfasst.

5. Nach hinten gerichteter Fahrzeugkindersitz nach einem der vorhergehenden Ansprüche, wobei der Fahrzeugkindersitz (2) mindestens einen Elektromotor umfasst, der die Verschiebung des Sitzes (10) erleichtert.

6. Nach hinten gerichteter Fahrzeugkindersitz nach einem der vorhergehenden Ansprüche, wobei in dem eingeschränkten Modus die verfügbare Verschiebung (Lre) auf 90 % des ersten Abstands (Lto), vorzugsweise 85 % des ersten Abstands (Lto), besonders bevorzugt 80 % des ersten Abstands (Lto), noch stärker bevorzugt 75 % des ersten Abstands (Lto) begrenzt ist.

7. Nach hinten gerichteter Fahrzeugkindersitz nach einem der vorhergehenden Ansprüche, wobei der eingeschränkte Modus einen Unfallmodus umfasst, in dem der Sitz (10) in eine vorbestimmte Position verschoben wird, die für einen bevorstehenden Unfall angepasst ist.

8. Nach hinten gerichteter Fahrzeugkindersitz nach einem der vorhergehenden Ansprüche, wobei der Fahrzeugkindersitz (2) einen Austrittsmodus umfasst, in dem der Sitz (10) gedreht wird, um einer zugehörigen Fahrzeugtür zugewendet zu werden.

9. Nach hinten gerichteter Fahrzeugkindersitz nach einem der vorhergehenden Ansprüche, wobei der Fahrzeugkindersitz (2) so angepasst ist, dass er mindestens Teile eines Beifahrersitzes in dem Fahrzeug ersetzt.

10. Nach hinten gerichteter Fahrzeugkindersitz nach Anspruch 9, wobei der Fahrzeugkindersitz (2) angepasst ist, um mit dem Verschiebemechanismus des Beifahrersitzes zusammenzuwirken, wobei der Verschiebemechanismus des Beifahrersitzes angepasst ist, um die Verschiebung des Fahrzeugkindersitzes (2) zu bewirken.

11. Fahrzeug, umfassend den nach hinten gerichteten Fahrzeugkindersitz nach einem der vorhergehenden Ansprüche, wobei das nach hinten gerichtete Fahrzeugkindersitz vorzugsweise in der vorderen Beifahrerposition des Fahrzeugs positioniert ist.

12. Verfahren zum Betreiben eines nach hinten gerichteten Fahrzeugkindersitzes (2), wobei der Fahrzeugkindersitz (2) einen verschiebbaren Sitz (10), eine Sensoranordnung (30) und eine Verarbeitungseinheit (20) umfasst, wobei der Sitz (10) in einem Pflegemodus um einen ersten Abstand (Lto) verschiebbar ist, wobei das Verfahren die folgenden Schritte umfasst:
a) Abrufen von Inputdaten aus der Sensoranordnung (30), die eine erhöhte Wahrscheinlichkeit für einen Unfall anzeigen;
b) Umschalten auf Basis mindestens der Inputdaten aus der Sensoranordnung (30) in einen eingeschränkten Modus, in dem der verfügbare Verschiebungsabstand für den Sitz (2) im Vergleich zu dem ersten Abstand (Lto) begrenzt ist.

13. Verfahren nach Anspruch 12, wobei in Schritt b) der verfügbare Verschiebungsabstand (Lre) auf 90 % des ersten Abstands (Lto), vorzugsweise 85 % des ersten Abstands (Lto), besonders bevorzugt 80 % des ersten Abstands (Lto), noch stärker bevorzugt 75 % des ersten Abstands (Lto) begrenzt ist.

14. Verfahren nach Anspruch 12 oder 13, wobei in Schritt b) die Begrenzung des verfügbaren Verschiebungsabstandes eine Sperrzone definiert, wobei die Verarbeitungseinheit (20) eine Verschiebung des Sitzes (10) einleitet, wenn der Sitz (10) außerhalb der Sperrzone positioniert ist.

15. Verfahren nach einem der Ansprüche 12-14, wobei das Verfahren ferner den folgenden Schritt umfasst: Aufheben des eingeschränkten Modus und Umschalten in den Pflegemodus, wenn sich die erhöhte Wahrscheinlichkeit für einen Unfall wieder normalisiert oder in einen voreingestellten Wert oder Zustand zurückkehrt.

## Revendications

1. Siège enfant pour véhicule orienté vers l'arrière destiné à un véhicule, **caractérisé en ce que** ledit siège enfant (2) pour véhicule comprend un siège déplaçable (10), un agencement de capteurs (30) et une unité de traitement (20), ladite unité de traitement (20) pouvant faire fonctionner ledit siège (10) en réponse à une entrée provenant dudit agencement de capteurs (30) entre au moins un mode de soin dans lequel ledit siège (10) peut être déplacé d'une première distance (Lto) par rapport à un point de référence sélectionné, et un mode restreint dans lequel ledit siège (10) est empêché d'être déplacé sur toute la longueur de ladite première distance (Lto).

2. Siège enfant pour véhicule orienté vers l'arrière selon l'une quelconque des revendications précédentes, ledit point de référence étant un siège de passager arrière (4) dudit véhicule (1), une console centrale, une porte associée ou un tableau de bord avant.

3. Siège enfant pour véhicule orienté vers l'arrière selon l'une quelconque des revendications précédentes, ledit siège (10) pouvant être déplacé le long de deux axes ou plus (X, Y, Z), de préférence trois axes (X, Y, Z), et ledit mode restreint limite le déplacement disponible le long d'un ou plusieurs desdits axes (X, Y, Z).

4. Siège enfant pour véhicule orienté vers l'arrière selon l'une quelconque des revendications précédentes, ledit agencement de capteurs (30) comprenant un ou plusieurs capteurs, de préférence des capteurs pour des données de passagers, des données de compteur de vitesse, des données GPS, des informations routières, des données météorologiques, des données d'état de la route, des données de circulation, des informations de véhicule à véhicule ; des informations pré-collision ; des données de chronomètre, des données de lumière ambiante, des données d'interface utilisateur de visage ou de geste.

5. Siège enfant pour véhicule orienté vers l'arrière selon l'une quelconque des revendications précédentes, ledit siège enfant (2) pour véhicule comprenant au moins un moteur électrique facilitant le déplacement dudit siège (10).

6. Siège enfant pour véhicule orienté vers l'arrière selon l'une quelconque des revendications précédentes, dans ledit mode restreint, le déplacement disponible (Lre) étant limité à 90 % de la première distance (Lto), de préférence à 85 % de ladite première distance (Lto), plus préférentiellement à 80 % de ladite première distance (Lto), encore plus préférentiellement à 75 % de ladite première distance (Lto).

7. Siège enfant pour véhicule orienté vers l'arrière selon l'une quelconque des revendications précédentes, ledit mode restreint comprenant un mode accident dans lequel ledit siège (10) est déplacé dans une position prédéfinie adaptée à un accident imminent.

8. Siège enfant pour véhicule orienté vers l'arrière selon l'une quelconque des revendications précédentes, ledit siège enfant (2) pour véhicule comprenant un mode de sortie, dans lequel ledit siège (10) est tourné pour faire face à une porte de véhicule associée.

9. Siège enfant pour véhicule orienté vers l'arrière selon l'une quelconque des revendications précédentes, ledit siège enfant (2) pour véhicule étant conçu pour remplacer au moins des parties d'un siège passager dans ledit véhicule.

10. Siège enfant pour véhicule orienté vers l'arrière selon la revendication 9, ledit siège enfant (2) pour véhicule étant conçu pour coopérer avec le mécanisme de déplacement dudit siège passager, ledit mécanisme de déplacement dudit siège passager étant conçu pour effectuer ledit déplacement dudit siège enfant (2) pour véhicule.

11. Véhicule comprenant le siège enfant pour véhicule orienté vers l'arrière selon l'une quelconque des revendications précédentes, ledit siège enfant de véhicule orienté vers l'arrière étant positionné de préférence à la position du passager avant du véhicule.

12. Procédé pour faire fonctionner un siège enfant (2) pour véhicule orienté vers l'arrière, ledit siège enfant (2) pour véhicule comprenant un siège déplaçable (10), un agencement de capteurs (30) et une unité de traitement (20), ledit siège (10) pouvant être déplacé d'une première distance (Lto) lorsqu'il est en mode de soin, ledit procédé comprenant les étapes consistant à :
a) récupérer des données d'entrée à partir dudit agencement de capteurs (30) indiquant une probabilité accrue d'accident ;
b) en fonction au moins des données d'entrée provenant dudit agencement de capteurs (30), commuter vers un mode restreint dans lequel la distance de déplacement disponible pour ledit siège (2) est limitée par rapport à ladite première distance (Lto).

13. Procédé selon la revendication 12, à l'étape b), ladite distance de déplacement disponible (Lre) étant limitée à 90 % de la première distance (Lto), de préférence à 85 % de ladite première distance (Lto), plus préférentiellement à 80 % de ladite première distance (Lto), encore plus préférentiellement à 75 % de ladite première distance (Lto).

14. Procédé selon la revendication 12 ou 13, à l'étape b), la restriction de la distance de déplacement disponible définissant une zone restreinte, ladite unité de traitement (20) déclenchant un déplacement dudit siège (10) si ledit siège (10) est positionné à l'extérieur de ladite zone restreinte.

15. Procédé selon l'une quelconque des revendications 12 à 14, le procédé comprenant en outre l'étape consistant à : annuler le mode restreint et passer audit mode de soin lorsque ladite probabilité accrue d'accident est ramenée à la normale, ou à une valeur ou un état prédéfini.
